# EUROPEAN PATENT APPLICATION

(11) **EP 2 778 184 A1**
(43) Date of publication of application: **17.09.2014**
(21) Application number: 14158477.1
(22) Date of filing: 10.03.2014
(51) Int. Cl.: C08F 236/10, C08K 3/04, C08L 9/06, B60C 1/00

(54) **Solution polymerization prepared styrene/butadiene elastomer containing liquid styrene/butadiene polymer and tire with component**

(30) Priority: 11.03.2013 US 201313792972
(71) Applicant: The Goodyear Tire & Rubber Company, Akron, Ohio 44316 (US)
(72) Inventor: Bethea, Robert Anthony, North Canton, OH Ohio 44720 (US); Schulmeister, Klaus, 63755 Alzenau (DE); Woods, John, D-63456 Hanau Klein-Auheim (DE)
(74) Representative: Kutsch, Bernd

(57) **Abstract**

A method of preparing an organic solvent solution polymerization-prepared high molecular weight styrene/butadiene elastomer (H-SSBR) extended with a liquid styrene/butadiene polymer (LSBP) is disclosed which comprises, based on parts by weight per 100 parts by weight H-SSBR (phr):
(A) providing a cement comprising 100 parts by weight of a high molecular weight styrene/butadiene elastomer (H-SSBR) prepared by polymerization of styrene and 1,3-butadiene monomers in an organic solvent wherein said cement comprises a polymerizate of said H-SSBR and said organic solvent and wherein said H-SSBR has a number average molecular weight in a range of from 200,000 to 1,000,000 grams/mole; and
(B) providing 5 to 60 parts by weight of liquid styrene/1,3-butadiene polymer (LSBP) having a number average molecular weight in a range of from 1,000 to 50,000 grams/mole; and
(C) recovering a composite comprising a blend of H-SSBR and LSBP by removing said organic solvent.

Also, a respective rubber composition and a tire comprising such a rubber composition is disclosed.

## Description

### Field of the Invention

This invention relates to preparation and use of organic solvent solution polymerization-prepared styrene/butadiene elastomers, particularly high molecular weight styrene/butadiene elastomers which are extended by an inclusion of a liquid styrene/butadiene polymer. The invention also relates to a tire having a component comprising a rubber containing such extended styrene/butadiene elastomer.

### Background of the Invention

It is sometimes desired to use high molecular weight elastomers, which are typically high viscosity elastomers, to prepare rubber compositions to achieve desired physical properties for cured rubber compositions, particularly for various vehicular tire components, such as for example, tire treads.

High molecular weight styrene/butadiene elastomers can be prepared by organic solvent solution polymerization of styrene and 1,3-butadiene monomers (H-SSBRs). Aqueous emulsion polymerization preparation of styrene/1,3-butadiene elastomers (ESBRs) does not yield such high molecular weight (therefore higher viscosity) elastomers.

However, accompanying the desired high molecular weight of such H-SSBRs is a significantly increased difficulty in processing the uncured H-SSBRs both at the elastomer production facility, such as for example for the finishing of the elastomer at that facility, and also at a tire production plant such as for example for preparation of rubber compositions by high shear mixing in internal rubber mixers and by extrusion and calendering of the rubber compositions.

Therefore, such high viscosity H-SSBRs are sometimes petroleum oil-extended (blended with petroleum derived rubber processing oil) at the H-SSBR production facility to reduce their mixing viscosity and promote better rubber composition processing at a tire manufacturing facility. As indicated, such H-SSBRs with rubber processing oil addition at the elastomer producing facility before the H-SSBR reaches a tire manufacturing facility are often referred to as being oil-extended SSBRs. Such rubber processing oils for extending the H-SSBR may be comprised of, for example, at least one of aromatic, naphthenic, and paraffinic based oils and particularly their mixtures.

Historically, some high viscosity elastomers have been blended at a tire manufacturing facility with liquid styrene/butadiene polymers (LSBPs) to promote improvements in processing of uncured rubber compositions, particularly for preparation of tire components. (For example, see US-B- 7,829,621, US-B-7,329,704 and US-B- 7,709,561.) Improvements in various tire properties such as, for example, dry traction, abrasion resistance and traction durability might also be promoted for tires which have a tread comprising such rubber composition.

It is desired, however, to evaluate whether the addition of liquid styrene/butadiene polymer (LSBP), instead of petroleum based rubber processing oils, to a H-SSBR at the rubber production facility, before dry mixing the H-SSBR in an internal rubber mixer at a tire manufacturing facility could be beneficially used for extending solvent solution-prepared high molecular weight styrene/butadiene elastomers (H-SSBRs).

The liquid styrene/butadiene polymer (LSBP) may be described as a low molecular weight copolymer of styrene and 1,3-butadiene. The molecular weight of the liquid styrene/butadiene polymer should be sufficiently low for it to be considered herein as being a separate class of molecular weight (very low molecular weight) compared to the higher molecular weight H-SSBR. The LSBP number average molecular weight for purposes of this invention should range from 1000 to 50,000, alternately from 3,000 to 15,000, grams per mol. Representative examples of such LSBP include, for example, Ricon™ 100 from Cray Valley or L-SBR-820 from Kuraray Co., Ltd.

It is anticipated that an inclusion of the liquid styrene/butadiene polymer (LSBP) for extension of the high molecular weight H-SSBR at the rubber production facility should be less than 50 (for example, in a range of from 10 to 50) parts by weight per hundred parts by weight (phr) of the H-SSBR because a greater amount would be expected to result in increased difficulty in processing of the rubber in a sense of making the resulting extended H-SSBR too soft and thereby a significant decrease in high shear force created during subsequent dry mixing in an internal rubber mixer at a tire production facility with an expected poorer dispersion of ingredients, including reinforcement fillers, in the rubber composition.

It is appreciated that, historically, free additions (additions by dry mixing with rubber compositions in, for example, internal rubber mixers) of liquid styrene/butadiene polymers have previously been used to aid in plasticizing a rubber composition to reduce its viscosity and to thereby make it more easily processable in an internal rubber mixer. For example see US-B- 7,829,621, US-B- 7,329,704 and US-B- 4,360,049. It is also appreciated that addition of a liquid styrene/butadiene polymer to a lower molecular weight aqueous emulsion-polymerization prepared styrene/butadiene elastomer has been related as being beneficial to promote wet traction for a tire tread. For example, see US-B- 6,469,104.

Some advantages have heretofore been mentioned in combining liquid styrene/butadiene polymer with an elastomer, for example a styrene/butadiene or polyisoprene elastomer, in the form of a pre-formed masterbatch. For example, see US-A- 6,242,523.

It is further appreciated that a process of preparation of styrene/butadiene elastomers by aqueous emulsion polymerization of styrene and 1,3-butadiene monomers and elastomers resulting from such polymerizations, differ significantly from the organic solvent solution polymerization of styrene and 1,3-butadiene, particularly from a high molecular weight styrene-butadiene rubber product (H-SSBR). Therefore, it is intended for this invention that the high molecular weight styrene-butadiene rubber be limited to an H-SSBR.

Blending a combination of high molecular weight elastomer and low molecular weight polymer, blended in their polymer cements, of, for example, styrene/butadiene copolymers, has been mentioned in US-A- 5,959,039. However, for such blend, the patent requires both polymers to have a value of S + V/2 (bound styrene percent plus vinyl content percent/2) of less than 25. Such value would be unsuitable for the practice of this invention for which it is desired that a value in a range of from 45 to 65 be required to satisfactorily promote a combination of dry traction and resistance to tread wear for a tire with tread of such rubber composition.

Therefore, the practice of this invention is a significant departure from US-A-5,959,039.

As previously indicated, it is a purpose of this evaluation to evaluate the use of liquid styrene/butadiene polymer (LSBP) instead of petroleum-based oil to extend organic solvent solution polymerization-prepared high molecular weight styrene/butadiene elastomers (H-SSBR's) at their polymer manufacturing facility instead of later and subsequent mixing (dry mixing) the LSBP with a rubber composition (e.g. with dry elastomers without solvent such as for example dry styrene/butadiene elastomer) in a rubber product manufacturing facility such as, for example, a tire manufacturing facility.

For such evaluation, it is important to appreciate that the liquid styrene/butadiene polymer (LSBP) differs significantly from petroleum based oils, not only from significantly different chemical makeup of the two constituents but also in expected physical property responses of the mixture of the LSBP with various dry elastomer containing rubber compositions at the product manufacturing facility.

In a context of this evaluation, the petroleum-based oils are often fractionated petroleum products (e.g. primarily at least one of naphthenic and paraffinic oils) composed of a mixture of carbon chains, usually, but not limited to, a wide C₅ to C₂₀ average range, so long as the oil mixture is primarily of a liquid nature at 23°C.

In contrast, liquid styrene-butadiene polymers (LSBP's) are copolymers of styrene and 1,3-butadiene monomers and tend to be of a higher molecular weight than the aforesaid petroleum-based oils and, also of higher viscosities (at equal temperatures). Further, carbon-to-carbon bonds contained in styrene/butadiene polymers can affect various physical properties of the elastomers (e.g. H-SSBR) with which they are mixed including their ability to co-cure with the elastomer (e.g. H-SSBR).

Consequently, as a result of these significant differences between use of such petroleum based oils and liquid styrene/butadiene polymers (LSBPs) for blending with a high molecular weight SSBR (H-SSBR), the results of this evaluation are to be determined by an experimental undertaking.

Historically, petroleum-derived oils have a wide range of conditions under which they can be stored and used. For example they can usually be conveniently stored under a wide range of temperatures, ranging from 20°to 100°C, without appreciable degradation or significant changes in physical properties over a short period of time. Further, their viscosities can typically be relatively stable.

In contrast, liquid styrene/butadiene polymers (LSBPs) are not expected to store well without appreciable degradation at temperatures significantly above 70°C due, in part, to the polymeric nature of the liquid elastomer. Since it is therefore not practical to allow the liquid styrene/butadiene polymers to be heated to such elevated temperature, it becomes desirable to introduce the liquid styrene/butadiene polymer with the high molecular weight H-SSBR at a much lower temperature. Therefore, it is largely impractical to blend the liquid styrene/butadiene polymer with a high molecular weight H-SSBR at higher temperature rubber mixing (e.g. dry mixing in an internal rubber mixer) circumstance whereas it may be entirely suitable to mix (dry mix in an internal rubber mixer) a normal petroleum based oil at the higher rubber mixing temperature in an internal rubber mixer as would be familiar to those having skill in mixing elastomers with petroleum based oils.

For this evaluation, addition of an organic solvent based cement of a liquid styrene/butadiene polymer (LSBP) to an organic solvent based cement of a high molecular weight SSBR (H-SSBR), namely to its polymerizate product resulting from its organic solvent based polymerization of styrene and 1,3-butadiene monomers is to be undertaken with the result not being entirely known without experimentation.

Indeed, while it is expected that inclusion of a liquid styrene/butadiene polymer into an organic solvent solution of high molecular weight styrene/butadiene elastomer (H-SSBR) is likely to present a very different array of sulfur cured rubber physical properties for the mixture for use in rubber compositions for tire components, particularly tire treads, as compared to an inclusion of petroleum based oil by dry mixing with rubber compositions in an internal rubber mixer the results of the evaluation are to be determined by experimentation.

In the description of this invention, the terms "compounded" rubber compositions and "compounds" are interchangeable, and where used refer to rubber compositions which have been compounded, or blended, with appropriate rubber compounding ingredients. The terms "rubber" and "elastomer" may be used interchangeably unless otherwise indicated. The amounts of materials are usually expressed in parts of material per 100 parts of rubber by weight (phr).

### Summary and Practice of the Invention

The invention relates to a method in accordance with claim 1, to an elastomer or rubber composition in accordance with claim 11, 12 or 13, and to a tire in accordance with claim 15.

Dependent claims refer to preferred embodiments of the invention.

In one preferred aspect, the invention relates to a process comprising blending liquid styrene/butadiene polymer (LSBP) with a high molecular weight styrene/butadiene elastomer (H-SSBR) in the organic solvent-containing cement used in its polymerization of styrene and 1,3-butadiene monomers (to form the H-SSBR), namely before recovery and drying of the LSBP extended H-SSBR to thereby form a composite comprising the LSBP extended H-SSBR.

In accordance with an embodiment of this invention, a method of preparing an organic solvent solution polymerization-prepared high molecular weight styrene/butadiene elastomer (H-SSBR) extended with a liquid styrene/butadiene polymer (LSBP) to said H-SSBR in its organic solvent solution comprises, based on parts by weight per 100 parts by weight H-SSBR (phr):
(A) a cement comprising 100 parts by weight of high molecular weight styrene/butadiene elastomer (H-SSBR) prepared by polymerization of styrene and 1,3-butadiene monomers in an organic solvent where said cement comprises a polymerizate of said H-SSBR and said organic solvent, wherein said H-SSBR has a number average molecular weight in a range of form a 200,000 to 1,000,000, alternately from 300,000 to 500,000 grams per mole; and
(B) 5 to 60, alternately 10 to 50, parts by weight of liquid styrene and 1,3-butadiene polymer (LSBP) having a number average molecular weight in a range of form 1,000 to 50,000, alternately from 3,000 to 15,000, grams/mole; and
(C) recovering a composite comprising a blend of H-SSBR and LSBP by removing said organic solvent;
wherein said H-SSBR has a bound styrene content in a range of from 30 to 45 percent and a vinyl content in its polybutadiene portion in a range of from 25 to 40 percent such that its S + V/2 (percent bound styrene plus percent vinyl content/2) is in a range of from 42 to 65;
wherein said LSBP has a bound styrene content in a range of from 25 to 30 percent and a vinyl content in its polybutadiene portion in a range of from 35 to 75 percent.

In one embodiment, said liquid styrene/butadiene copolymer (LSBP) is provided as a cement thereof in an organic solvent, particularly as a polymerizate thereof including a solvent used in its polymerization.

In one embodiment, the bound styrene and vinyl content values for the LSBP are such that S + V/2 (percent bound styrene plus percent vinyl content/2) is in a range of from 42 to 65.

In practice, for said method, said styrene and 1,3-butadiene are preferabl anionically polymerized in said organic solvent to form a cement as a polymerizate of said H-SSBR and organic solvent and said styrene and 1,3-butadiene are preferably anionically polymerized in an organic solvent to form a cement comprising a polymerizate of said LSBP and organic solvent.

In practice, said polymerizations are preferably terminated prior to blending said cements.

The liquid styrene/butadiene polymer (LSBP) is a low molecular weight copolymer of styrene and butadiene. The molecular weight of the liquid styrene/butadiene polymer (LSBP) should be sufficiently low to describe it as a separate class of molecular weight compared to the higher molecular weight H-SSBR. The LSBP number average molecular weight should ideally range from 1,500 to 25,000 grams per mol. Representative examples of LSBP include Ricon™ 100 from Cray Valley and Goodrite™ 1800X73 from Emerald Performance Materials.

As indicated, in further accordance with this invention, a rubber composition comprising a composite of said liquid styrene/butadiene polymer and H-SSBR prepared by such method is provided.

In additional accordance with this invention, an article of manufacture, such as, for example, a tire, is provided having a rubber component of a rubber composition containing said blend of H-SSBR and LSBP.

In one embodiment, said H-SSBR may be a tin or silicon coupled styrene/butadiene elastomer which results in what is sometimes referred to as a star branched configuration of the elastomer.

In one embodiment the H-SSBR may contain at least one functional group comprising amine, siloxy, carboxyl and hydroxyl groups, particularly functional groups. Such functional groups may be reactive with, for example, silanol groups on a synthetic amorphous silica such as, for example, a precipitated silica.

In one embodiment, the H-SSBR may be a tin or silicon coupled H-SSBR containing, for example, at least one of said functional groups

In one embodiment, said H-SSBR, (in the absence of solvent and liquid styrene/butadiene polymer), has a Mooney viscosity (23°C) in a range of from 50 to 180, alternately from 80 to 120. It is recognized that a high viscosity (high Mooney viscosity) of the H-SSBR above a Mooney viscosity 80 and particularly above 100, would provide significant processing difficulties for the H-SSBR.

It is appreciated that the above mentioned high Mooney viscosity (23°C) of 80 or above, particularly of 100 or above is evidentiary of a relatively high molecular weight of the H-SSBR.

In one embodiment of said method, said liquid styrene/butadiene polymer-extended composite of H-SSBR (in the absence of, namely after removal of said solvent) has a significantly reduced Mooney viscosity (23°C) in a range of, for example, and depending upon the Mooney viscosity of the H-SSBR itself, from 25 to 85 to present a more beneficially processable H-SSBR composite.

The anionic polymerizations employed in making such H-SSBR in the organic solvent solution are typically initiated by adding an organolithium initiator to an organic solution polymerization medium which contains the styrene and 1,3-butadiene monomers. Such polymerizations are typically carried out utilizing continuous or batch polymerization techniques. In such continuous polymerizations, monomers and initiator are continuously added to the organic solvent polymerization medium with the synthesized rubbery styrene/butadiene elastomer (H-SSBR) being continuously withdrawn in its organic solvent solution as a cement thereof. Such continuous polymerizations are typically conducted in a multiple reactor system.

Suitable polymerization methods are known in the art, for example, and without an intended limitation, as disclosed in one or more US-A- 4,843,120; US-A-5,137,998; US-A- 5,047,483; US-A- 5,272,220; US-A- 5,239,009; US-A- 5,061,765; US-A- 5,405,927; US-A- 5,654,384; US-A- 5,620,939; US-A- 5,627,237; US-A-5,677,402; US-A- 6,103,842; and US-A- 6,559,240, all of which are fully incorporated herein by reference.

The H-SSBRs of the present invention are produced by anionic initiated polymerization employing an organo alkali metal compound, usually an organo monolithium compound, as an initiator which may, for example, be described as follows: The first step of the process involves contacting the combination of styrene and 1,3-butadiene monomer(s) to be polymerized with the organo monolithium compound (initiator) in the presence of an inert diluent, or solvent, thereby forming a living polymer compound having the simplified structure A-Li. The monomers may be a vinyl aromatic hydrocarbon such as the styrene and a conjugated diene such as the 1,3-butadiene. Styrene is the preferred vinyl aromatic hydrocarbon and the preferred diene is 1,3-butadiene.

The inert diluent may be an aromatic or naphthenic hydrocarbon, e.g., benzene or cyclohexane, which may be modified by the presence of an alkene or alkane such as pentenes or pentanes. Specific examples of other suitable diluents include n-pentane, hexane such as for example n-hexane, isoctane, cyclohexane, toluene, benzene and xylene. The organomonolithium compounds (initiators) that are reacted with the polymerizable additive in this invention are represented by the formula a RLi, wherein R is an aliphatic, cycloaliphatic, or aromatic radical, or combinations thereof, preferably containing from 2 to 20 carbon atoms per molecule. Exemplary of these organomonolithium compounds are ethyllithium, n-propyllithium, isopropyllithium, n-butyllithium, sec-butyllithium, tertoctyllithium, n-decyllithium, n-eicosyllithium, phenyllithium, 2-naphthyllithium, 4-butylphenyllithium, 4-tolyllithium, 4-phenylbutyllithium, cyclohexyllithium, 3,5-di-n-heptylcyclohexyllithium, 4-cyclopentylbutyl-lithium, and the like. The alkyllithium compounds are preferred for employment according to this invention, especially those wherein the alkyl group contains from 3 to 10 carbon atoms. A preferred initiator is n-butyllithium.

The amount of organolithium initiator to effect the anionically initiated polymerization will vary with the monomer(s) being polymerized and with the molecular weight that is desired for the polymer being synthesized. However, generally, from 0.01 to 1 phm (parts per 100 parts by weight of monomer) of an organolithium initiator will be often be utilized. In many cases, from 0.01 to 0.1 phm of an organolithium initiator will be utilized with it often being more desirable to utilize 0.025 to 0.07 phm of the organolithium initiator.

The polymerization temperature utilized can vary over a broad range such as, for example, from -20°C to 180°C. However, often a polymerization temperature within a range of 30°C to 125°C will be desired. It is often typically desired for the polymerization temperature to be within a more narrow range of 45°C to 100°C or within a range of from 60°C to 85°C. The pressure used for the polymerization reaction, where applicable, will normally be sufficient to maintain a substantially liquid phase under the conditions of the polymerization reaction.

As previously indicated, the H-SSBRs prepared in the organic solution by the anionically initiated polymerization may be coupled with a suitable coupling agent, such as a tin halide or a silicon halide, to improve desired physical properties by increasing their molecular weight with a usual increase in their viscosity (e.g. Mooney viscosity of the uncured SSBR). Tin-coupled styrene/butadiene polymers have been observed to improve tire treadwear and to reduce tire rolling resistance when used in tire tread rubbers. Such tin-coupled H-SSBRs are typically made by coupling the H-SSBR with a tin coupling agent at or near the end of the polymerization used in synthesizing the H-SSBR. In the coupling process, live polymer chain ends react with the tin coupling agent, thereby coupling the H-SSBR. For example, up to four live chain ends can react with tin tetrahalides, such as tin tetrachloride, thereby coupling the polymer chains together.

The coupling efficiency of the tin coupling agent is dependent on many factors, such as the quantity of live chain ends available for coupling and the quantity and type of polar modifier, if any, employed in the polymerization. For instance, tin coupling agents are generally not as effective in the presence of polar modifiers. However, polar modifiers such as tetramethylethylenediamine, are frequently used to increase the glass transition temperature of the rubber for improved properties, such as improved traction characteristics in tire tread compounds. Coupling reactions that are carried out in the presence of polar modifiers typically have a coupling efficiency of 50 to 60 percent in batch processes.

In cases where the H-SSBR will be used in rubber compositions that are loaded primarily with carbon black reinforcement, the coupling agent for preparing the elastomer may typically be a tin halide. The tin halide will normally be a tin tetrahalide, such as tin tetrachloride, tin tetrabromide, tin tetrafluoride or tin tetraiodide. However, mono-alkyl tin trihalides can also optionally be used. Polymers coupled with mono-alkyl tin trihalides have a maximum of three arms. This is, of course, in contrast to H-SSBR's coupled with tin tetrahalides which have a maximum of four arms. To induce a higher level of branching, tin tetrahalides are normally preferred. In general, tin tetrachloride is usually the most preferred.

In cases where the H-SSBR will be used in compounds that are loaded with high levels of silica, the coupling agent for preparing the H-SSBR will typically be a silicon halide. The silicon-coupling agents that can be used will normally be silicon tetrahalides, such as silicon tetrachloride, silicon tetrabromide, silicon tetrafluoride or silicon tetraiodide. However, mono-alkyl silicon trihalides can also optionally be used. H-SSBRs coupled with silicon trihalides have a maximum of three arms. This is, of course, in contrast to H-SSBRs coupled with silicon tetrahalides during their manufacture which have a maximum of four arms. To induce a higher level of branching, if desired, of the H-SSBR during its manufacture, silicon tetrahalides are normally preferred. In general, silicon tetrachloride is usually the most desirable of the silicon-coupling agents for such purpose.

In one embodiment, various organic solvents may be used for the polymerization medium which are relatively inert to the polymerization reaction such as for example, the aforesaid n-pentane, n-hexane, isooctane, cyclohexane, toluene, benzene, xylene and the like, (exclusive, of course, of water based emulsifier containing liquid mediums). Solvent removal from the polymerizate, or cement, may be accomplished using one or more of the methods as are known in the art, including but not limited to precipitation, steam stripping, filtration, centrifugation, drying and the like.

The recovered liquid styrene/butadiene polymer extended H-SSBR may be compounded (blended) into a vulcanizable (sulfur vulcanizable) rubber composition which may, and will usually, include other elastomers, particularly sulfur curable diene-based elastomers, as is well known to those familiar with such art. The phrase "sulfur curable rubber" or elastomer such as "diene-based elastomers" is intended to include both natural rubber and its various raw and reclaim forms as well as various synthetic rubbers including the SSBR used in the practice of this invention.

In further accordance with this invention, a rubber composition is provided comprising said liquid styrene/butadiene polymer-extended H-SSBR.

In additional accordance with this invention, a rubber composition is provided comprising, based upon parts by weight per 100 parts by weight rubber (phr):
(A) conjugated diene-based elastomers comprising:
   (1) 10 to 100, alternately from 50 to 80, phr of liquid styrene/butadiene polymer extended H-SSBR (according to this invention), and correspondingly
   (2) from zero to 90, alternately from 20 to 50, phr of at least one additional elastomer comprising at least one of polymers of cis 1,4-polyisoprene, cis 1,4-polybutadiene, isoprene/butadiene, styrene/isoprene, styrene/butadiene and styrene/isoprene/butadiene elastomers, 3,4-polyisoprene rubber, carboxylated rubber, and silicon-coupled and tin-coupled elastomer (generally resulting in a star-branched configuration of the elastomer),
(B) 40 to 110, alternately from 50 to 80, phr of reinforcing filler comprising:
   (1) silica such as amorphous synthetic silica (e.g. precipitated silica), or
   (2) a rubber reinforcing carbon black, or
   (3) a combination of silica and rubber reinforcing carbon black (containing, for example, 20 to 90 weight percent of silica or precipitated silica, alternately from 55 to 90 weight percent of silica or precipitated silica for silicarich reinforcing filler and alternately from 20 to 45 weight percent silica or precipitated silica for a carbon black-rich reinforcing filler);
(C) a silica coupling agent (for said silica where said reinforcing filler contains silica) having a moiety reactive with hydroxyl groups (e.g. silanol groups) on said silica and another different moiety interactive with carbon-to-carbon double bonds of said conjugated diene-based elastomers (including said H-SSBR).

In further accordance with this invention a tire is provided which contains at least one component comprising said rubber composition.

In practice, it is to be appreciated that one or more of such additional elastomers may be in a form of an oil extended elastomer.

In practice, the silicas or precipitated silicas may, for example, be characterized by having a BET surface area, as measured using nitrogen gas, in the range of, for example, 40 to 600, and more usually in a range of 50 to 300 square meters per gram. The BET method of measuring surface area might be described, for example, in the Journal of the American Chemical Society, Volume 60, as well as ASTM D3037.

Such silicas may, for example, also be characterized by having a dibutylphthalate (DBP) absorption value, for example, in a range of 100 to 400, and more usually 150 to 300 cc/100g.

Various commercially available silicas may be used, such as silicas from PPG Industries under the Hi-Sil trademark with designations 210 and 243; silicas from Rhodia, with, for example, designations of Z1165MP and Z165GR; silicas from Evonic with, for example, designations VN2 and VN3; and chemically treated silicas such as for example Agilon™ 400 from PPG.

Representative examples of rubber reinforcing carbon blacks are, for example those with ASTM designations of N110, N121, N220, N231, N234, N242, N293, N299, S315, N326, N330, N332, N339, N343, N347, N351, N358, N375, N539, N550, N582, N630, N642, N650, N683, N754, N762, N765, N774, N787, N907, N908, N990 and N991. Such rubber reinforcing carbon blacks may have iodine absorptions ranging from, for example, 9 to 145 g/kg and DBP numbers ranging from 34 to 150 cc/100 g.

Other fillers may be used in the vulcanizable rubber composition including particulate fillers including ultra high molecular weight polyethylene (UHMWPE); particulate polymer gels such as those disclosed in US-A- 6,242,534; US-A-6,207,757; US-A- 6,133,364; US-A- 6,372,857; US-A- 5,395,891; or US-A-6,127,488, and plasticized starch composite filler such as that disclosed in US-A-5,672,639. One or more other fillers may be used in an amount ranging from 1 to 20 phr.

It may be desired for the silica-containing rubber composition to contain a silica coupling agent for the silica comprising for example,
(A) bis(3-trialkoxysilylalkyl) polysulfide containing an average in range of from 2 to 4 sulfur atoms in its connecting bridge, or
(B) an organoalkoxymercaptosilane, or
(C) their combination.

Representative of such bis(3-trialkoxysilylalkyl) polysulfide comprises bis(3-triethoxysilylpropyl) polysulfide.

It is readily understood by those having skill in the art that the vulcanizable rubber composition would be compounded by methods generally known in the rubber compounding art, such as, for example, mixing various additional sulfur-vulcanizable elastomers with the H-SSBR composite and various commonly used additive materials such as, for example, sulfur and sulfur donor curatives, sulfur vulcanization curing aids, such as activators and retarders and processing additives, resins including tackifying resins and plasticizers, petroleum based or derived process oils in addition to the liquid styrene/butadiene polymer, LSBP, fillers such as rubber reinforcing fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts. Representative examples of sulfur donors include elemental sulfur (free sulfur), an amine disulfide, polymeric polysulfide and sulfur olefin adducts. Usually it is desired that the sulfur-vulcanizing agent is elemental sulfur. The sulfur-vulcanizing agent may be used in an amount ranging, for example, from 0.5 to 8 phr, with a range of from 1.5 to 6 phr being often preferred. Typical amounts of tackifier resins, if used, may comprise, for example, 0.5 to 10 phr, usually 1 to 5 phr. Typical amounts of processing aids comprise 1 to 80 phr. Additional process oils, if desired, may be added during compounding in the vulcanizable rubber composition in addition to the extending liquid SBR contained in the liquid SBR-extended H-SSBR. The additional petroleum based or derived oils may include, for example, aromatic, paraffinic, naphthenic, and low PCA oils such as MEW, TDAE, and heavy naphthenic, although low PCA oils might be preferred. Typical amounts of antioxidants may comprise, for example, 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants may comprise, for example, 1 to 5 phr. Typical amounts of fatty acids, if used, which can include stearic acid comprise 0.5 to 3 phr. Typical amounts of zinc oxide may comprise, for example, 1 to 5 phr. Typical amounts of waxes comprise 1 to 5 phr. Often microcrystalline waxes are used. Typical amounts of peptizers, when used, may be used in amounts of, for example, 0.1 to 1 phr. Typical peptizers may be, for example, pentachlorothiophenol and dibenzamidodiphenyl disulfide.

Sulfur vulcanization accelerators are used to control the time and/or temperature required for vulcanization and to improve the properties of the vulcanizate. In one embodiment, a single accelerator system may be used, i.e., primary accelerator. The primary accelerator(s) may be used in total amounts ranging, for example, from 0.5 to 4, sometimes desirably 0.8 to 1.5, phr. In another embodiment, combinations of a primary and a secondary accelerator might be used with the secondary accelerator being used in smaller amounts, such as, for example, from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. Often desirably the primary accelerator is a sulfenamide. If a second accelerator is used, the secondary accelerator is often desirably a guanidine such as for example a diphenylguanidine, a dithiocarbamate or a thiuram compound.

The mixing of the vulcanizable rubber composition can be accomplished by methods known to those having skill in the rubber mixing art. For example, the ingredients are typically mixed in at least two stages, namely at least one non-productive stage followed by a productive mix stage. The final curatives, including sulfur-vulcanizing agents, are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermo mechanical mixing step. The thermo mechanical mixing step generally comprises a mechanical working in a mixer or extruder for a period of time suitable in order to produce a rubber temperature between 140°C and 190°C. The appropriate duration of the thermo mechanical working varies as a function of the operating conditions and the volume and nature of the components. For example, the thermo mechanical working may be from 1 to 20 minutes.

The vulcanizable rubber composition containing the liquid styrene/butadiene polymer-extended SSBR may be incorporated in a variety of rubber components of an article of manufacture such as, for example, a tire. For example, the rubber component for the tire may be a tread (including one or more of a tread cap and tread base), sidewall, apex, chafer, sidewall insert, wire coat or innerliner; often desirably the component is a tread.

The pneumatic tire of the present invention may be a race tire, passenger tire, motorcycle tire, aircraft tire, agricultural, earthmover, off-the-road or truck tire.

Usually desirably the tire is a passenger, motorcycle or race tire. The tire may also be a radial or bias ply tire, with a radial ply tire being usually desired.

Vulcanization of the pneumatic tire of the present invention is generally carried out at conventional temperatures in a range of, for example, from 140°C to 200°C. Often it is desired that the vulcanization is conducted at temperatures ranging from 150°C to 180°C. Any of the usual vulcanization processes may be used such as heating in a press or mold, heating with superheated steam, gas, or hot air. Such tires can be built, shaped, molded and cured by various methods which are known and will be readily apparent to those having skill in such art.

The following examples are presented for the purposes of illustrating and not limiting the present invention. All parts and percentages are parts by weight, usually parts by weight per 100 parts by weight rubber (phr) unless otherwise indicated.

### EXAMPLE I

In this example, the effect of inclusion of liquid styrene/butadiene polymer and of petroleum oil for extending an anionically initiated organic solution polymerization of styrene and 1,3-butadiene monomers to prepare a high molecular weight styrene/butadiene elastomer (H-SSBR) is undertaken. The term "extending" means blending the petroleum based oil with the H-SSBR at the H-SSBR manufacturing facility before recovering the H-SSBR from its cement instead of blending the oil by dry mixing it with the H-SSBR in a rubber composition preparation facility such as, for example, a tire manufacturing facility.

### Preparation of the Base H-SSBR, Polymer W

An anionically initiated polymerization reaction was conducted in a 2000 liter reactor equipped with external heating/cooling jacket, and external agitator. The reactor temperature was controlled in the range of 60°C to 70°C throughout the reaction run time while the internal pressure ranged from 350 kPa to 450 kPa.

A hexane solution containing 15 weight percent total monomers (composed of 60 weight percent 1,3-butadiene and 40 weight percent styrene) in hexane was charged into the reactor. TMEDA (Tetramethylethylenediamine, 0.12 pphm) was added through a dip tube into the reactor as a modifier. After reaching the prescribed temperature, the anionic polymerization initiator, n-BuLi (n-butyllithium 1.6 M in hexane, 0.039 pphm) was then added to the reactor. Upon achieving an acceptable conversion of the monomers (90 to 99 percent), the resulting elastomer cement comprised of the styrene/butadiene elastomer and hexane solvent was transferred into a 2000 liter tank, where a polymerization termination agent (Polystay K and isopropyl alcohol, 1.0 and 0.5 pphm, respectively) was added. The H-SSBR was recovered.

Microstructure analysis of the recovered H-SSBR elastomer gave bound styrene content of 38.9 weight percent, and an olefin microstructure distribution of vinyl content in the polybutadiene portion of the H-SSBR of 27.6 percent.

In one aspect, the formula S + V/2 provides 39 + 28/2 = a value of 53 for the H-SSBR (where S represents the aforesaid percent bound styrene content and V represents the aforesaid percent vinyl content in its polybutadiene portion).

The Mooney viscosity (23°C), ML(1+4) of the recovered H-SSBR was 121.

The H-SSBR had a number average molecular weight of 350,000 (35x10⁴) grams per mole.

### Petroleum Oil Extension of Base H-SSBR; Preparation of Polymer X

The base H-SSBR (Polymer W) (102 kg), still contained in its cement and therefore containing the reaction solvent, namely the hexane, was blended with petroleum oil in a form of an SRAE oil (obtained as Sundex™ 8000EU), in an amount of 36.8 pphr, (or parts by weight per hundred parts of the elastomer). The final blend (composite) was finished by steam stripping in a 400 liter stripper to remove the solvent. The wet recovered H-SSBR composite was removed from the stripper and dried through an expeller. The collected styrene/butadiene elastomer composite was placed in an oven for drying.

The Mooney viscosity (23°C), ML(1+4) of the recovered H-SSBR composite (Polymer X) had a significantly reduced value of 56.

### Liquid Styrene/Butadiene Polymer Extension of Base H-SSBR; Preparation of Polymer Y

A similar procedure used for preparation of Polymer X composite , was also followed for the liquid styrene/butadiene polymer extension of the H-SSBR. To extend the H-SSBR with liquid styrene/butadiene polymer (LSBP), for this Experiment it was required to create a separate LSBP-containing cement, then blend the H-SSBR cement and LSBP cement prior to finishing (recovering the blended rubber) by steam stripping and drying to complete the extension process. In this case 102 kg of the base H-SSBR contained in its cement was mixed with 36.9 phr of the liquid styrene/butadiene polymer (LSBP) contained in its cement.

The LSBP (liquid polymer) used had a bound styrene content of 27 percent, and a vinyl content in the polybutadiene portion of the LSBP of 70 percent.

In one aspect, the formula S + V/2 provides 27 + 70/2 = a value of 62 for the LSBP (where S represents the aforesaid percent bound styrene content and V represents the aforesaid percent vinyl content in its polybutadiene portion).

As previously indicated, the term "extending" means blending the LSBP liquid polymer with the H-SSBR in the cement form of the H-SSBR and alternately in the cement form of the LSBP at the H-SSBR manufacturing facility before recovering the H-SSBR in a form of a dry elastomer instead of blending oil with the H-SSBR and instead of by dry mixing (mixing in the absence of the organic solvent) the H-SSBR with the LSBP in a rubber composition preparation facility (e.g. rubber product manufacturing facility) such as, for example, a tire manufacturing facility.

The Mooney viscosity (23°C), ML(1+4) of the recovered composite of H-SSBR and LSBP (Polymer Y) had a significantly reduced value of 47 which, in addition, was very significantly below the Mooney viscosity of 56 obtained for a petroleum oil extended H-SSBR. This is indicative of improvement in processing for the composite.

Accordingly, although the mechanism might not be fully understood, it is concluded that a significant and beneficial discovery was made by the liquid styrene/butadiene polymer (LSBP) extension of the H-SSBR in cement form adding the liquid styrene/butadiene polymer (LSBP) in the solvent-containing H-SSBR cement which was observed to significantly and beneficially enable a greater reduction of the recovered H-SSBR's Mooney viscosity than the petroleum oil extension which was thereby observed to beneficially enable an improved processing of the H-SSBR composite (Polymer Y) at the H-SSBR production facility as well as the H-SSBR compounding facility.

### EXAMPLE II

Experiments were conducted to evaluate the effect of employing the petroleum oil-extended elastomer (H-SSBR), namely Polymer X and liquid styrene/butadiene polymer extended elastomer (H-SSBR), namely Polymer Y, of Example I in a rubber composition which contained carbon black reinforcement.

Rubber compositions identified herein as Control rubber Sample A and Experimental Rubber Sample B were prepared and evaluated.

Control rubber Sample A contained the petroleum-based oil-extended H-SSBR, namely Polymer X.

Experimental rubber Sample B contained the liquid styrene/butadiene polymer-extended H-SSBR of Example I, namely Polymer Y.

The rubber Samples were prepared by mixing the elastomers with reinforcing filler as rubber reinforcing carbon black together in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample A and Experimental Rubber Sample B is presented in the following Table 1 expressed in parts by weight per 100 parts of rubber (phr) unless otherwise indicated.

**Table 1**

| Non-Productive Mixing Stage (NP) | Parts by weight (phr) |
|---|---|
| Petroleum oil extended H-SSBR (Polymer X)¹ | 50 or 0, with 18.75 parts oil |
| Liquid styrene/butadiene polymer extended H-SSBR (Polymer Y)² | 0 or 50, with 18.75 parts liquid polymer |
| Natural cis 1,4-polyisoprene Rubber | 50 |
| Carbon black³ | 85 |
| Zinc oxide | 3.5 |
| Fatty acid⁴ | 2.5 |
| Processing oil, petroleum derived (residual aromatic extract) | 29 |
| Traction and tackifying resins and rosins⁵ | 12 |
| Antioxidant | 1.5 |
| | |

| Productive Mixing Stage (P) | |
|---|---|
| Sulfur | 1.5 |
| Sulfur cure accelerator(s)⁶ | 2.5 |

| | |
|---|---|
| ¹Solution polymerization prepared high molecular weight styrene/butadiene rubber (H-SSBR) composite as Polymer X illustrated in Example I having 40 percent bound styrene, 39 percent vinyl content for its butadiene portion and, for this Example, containing 37.5 parts rubber processing petroleum-based super residual aromatic extract (SRAE) oil per 100 parts rubber and reported in Table 1 as parts by weight of the H-SSBR itself. ²Solution polymerization prepared styrene/butadiene rubber (H-SSBR) composite as Polymer Y illustrated in Example I with the H-SSBR having 40 percent bound styrene, 39 percent vinyl content for its butadiene portion and, for this Example, containing 37.5 parts by weight liquid styrene/butadiene polymer (LSBP) per 100 parts by weight of rubber (the H-SSBR). The LSBP had a 27 percent bound styrene and a 70 percent vinyl content (in the polybutadiene portion of the polymer) ³N110 rubber reinforcing carbon black, ASTM identification ⁴Primarily comprised of stearic, palmitic and oleic acids ⁵Mixture of each of a coumarone-indene resin and a hydrocarbon resin (obtained as Novares™ 100 from Rütgers and Norsolene™ S155 from Cray Valley) ⁶Sulfenamide and diphenylguanidine accelerators | |

The following Table 2 illustrates cure behavior and various physical properties of rubber compositions based upon the basic recipe of Table 1 and reported herein as a Control rubber Sample A and Experimental rubber Sample B. Where cured rubber samples are examined, such as for the stress-strain, hot rebound and hardness values, the rubber samples were cured for 28 minutes at a temperature of 150°C.

**Table 2**

| | Samples | |
|---|---|---|
| | Control | Experimental |
| Materials (phr) | A | B |
| Petroleum based oil extended H-SSBR (Polymer X) | 68.8 | 0 |
| Liquid styrene/butadiene polymer extended H-SSBR (Polymer Y) | 0 | 68.8 |
| Cis 1,4-polybutadiene rubber | 50 | 50 |
| | | |

| Properties | | |
|---|---|---|
| RPA¹ (100°C). Storage Modulus G'. MPa | | |
| Uncured G' 15% strain, 0.83 Hertz (kPa) | 225 | 173 |
| Cured G' modulus, 1% strain, 1 Hertz (kPa) | 1349 | 1335 |
| Cured G' modulus, 50% strain, 1 Hertz (kPa) | 463 | 431 |
| Tan delta at 10% strain, (kPa) | 0.244 | 0.284 |
| Cured J" Loss modulus, 40% strain, 1 Hertz (1/MPa) | 0.386 | 0.451 |
| | | |

| Rheometer (150°C) | | |
|---|---|---|
| T90 | 17.1 | 21.9 |
| Delta torque | 7.29 | 6.97 |
| | | |

| Stress-strain. ATS². 28 min. 150°C | | |
|---|---|---|
| 300% modulus, ring (MPa) | 5.5 | 5.7 |
| Elongation at break (%) | 676 | 520 |
| Tensile Strength (MPa) | 12.9 | 10.9 |
| | | |
| Rebound of cured rubber, 100°C | 37 | 31 |
| Shore A hardness of cured rubber, 100°C | 41 | 40 |
| Tear strength³ of cured rubber (N) | 115 | 94 |
| | | |

| Rheology. ARES⁴, 28 min. 150°C | | |
|---|---|---|
| Tan delta at 7.5% strain, 20 Hertz, 150°C | 0.190 | 0.22 |
| Cured G' modulus, 7.5% strain, 20 Hertz, 150°C (kPa) | 95.6 | 95.7 |

| | | |
|---|---|---|
| ¹Rubber Process Analyzer (RPA) instrument ²Automated Testing System (ATS) instrument ³Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force (N). ⁴An ARES rheometer, produced by TA Instruments, measures dynamic properties, such as storage and loss modulus as well as tangent delta, varying temperature with fixed frequency and strain. | | |

The results clearly show the improved processing benefit of the liquid styrene/butadiene polymer extended H-SSBR Polymer Y (Rubber Sample B) as compared to the SRAE oil-extended H-SSBR Polymer X (Rubber Sample A).

In particular, it is seen that the significantly lower uncured Modulus G' value of 173 kPa was obtained for Rubber Sample B containing the liquid styrene/butadiene polymer extended-H-SSBR, namely Polymer Y, versus the significantly higher uncured Modulus G' value of 225 kPa obtained for the SRAE oil-extended H-SSBR, namely Polymer X. This is predictive of significantly better extrusion rates when using rubber Sample B (liquid styrene/butadiene polymer extended H-SSBR) to produce an extruded tread rubber composition.

This is also predictive of an ability to enable use of a significantly increased molecular weight (increased Mooney viscosity) for the H-SSBR. When the liquid styrene/butadiene polymer extension was used it resulted in improved processing properties for the H-SSBR containing rubber composition with an enhanced utility of the increased Mooney viscosity of the H-SSBR containing rubber composition to result in a beneficially improved abrasion resistance of the rubber composition.

In addition to improved processing characteristics, an improvement in dry traction indicators was seen, as indicated by an increase in the hysteretic loss modulus, J", and an increase in the tangent delta at 10 percent strain, 1 Hertz, and 100°C as shown by Experimental rubber Sample B as compared to the Control rubber Sample A. This is particularly noteworthy considering the attainment of equal stiffness, indicated by G' at 50 percent strain, 1 Hertz, and 100°C of Experimental rubber Sample B and expected equal tread wear in view of observed similar 300 percent Modulus values as Control rubber Sample A.

### EXAMPLE III

Experiments were conducted to evaluate the effect of employing the non-extended elastomer (H-SSBR), namely Polymer W of Example I, with addition of liquid styrene/butadiene polymer (LSBP) as a "freely added" material to the rubber composition as an additive (dry mixed into the rubber composition containing the H-SSBR in an internal rubber mixer, not at and subsequent to the preparation of the H-SSBR at its production facility), and liquid styrene/butadiene polymer-extended elastomer (H-SSBR), namely Polymer Y, of Example I in a rubber composition which contained carbon black reinforcement.

Rubber compositions identified herein as Control rubber Sample C and Experimental Rubber Sample D were prepared and evaluated.

Control rubber Sample C contained the non-oil extended H-SSBR, namely Polymer W.

Experimental rubber Sample D contained the liquid styrene/butadiene polymer (LSBP) extended H-SSBR of Example I, namely Polymer Y.

The rubber samples were prepared by mixing the elastomers with reinforcing filler as rubber reinforcing carbon black together in a first non-productive mixing stage (NP1) in an internal rubber mixer for 4 minutes to a temperature of 160°C. The resulting mixture was subsequently mixed in a second sequential non-productive mixing stage (NP2) in an internal rubber mixer to a temperature of 160°C with no additional ingredients added. The rubber composition was subsequently mixed in a productive mixing stage (P) in an internal rubber mixer with a sulfur cure package, namely sulfur and sulfur cure accelerator(s), for 2 minutes to a temperature of 115°C. The rubber composition is removed from its internal mixer after each mixing step and cooled to below 40°C between each individual non-productive mixing stage and before the final productive mixing stage.

The basic formulation for the Control rubber Sample C and Experimental Rubber Sample D is presented in the following Table 3 expressed in parts by weight per 100 parts of rubber (phr) unless otherwise indicated.

**Table 3**

| Non-Productive Mixing Staqe (NP) | Parts by weight (phr) |
|---|---|
| Non- oil extended H-SSBR (Polymer W)¹ | 100 or 0 |
| Liquid styrene/butadiene polymer extended | 0 or 100, with 37.50 |
| H-SSBR (Polymer Y)² | parts liquid polymer |
| Carbon black³ | 92.5 |
| Zinc oxide | 2.7 |
| Fatty acid⁴ | 2.6 |
| Liquid styrene/butadiene polymer | 37.5 or 0 |
| Traction and tackifying resins and rosins⁵ | 10 |
| Antioxidant | 3.9 |
| Processing aids⁶ | 2 |
| | |

| Productive Mixing Stage (P) | |
|---|---|
| Sulfur | 1.7 |
| Sulfur cure accelerator(s)⁷ | 7.4 |

| | |
|---|---|
| ¹Solution polymerization prepared styrene/butadiene rubber (H-SSBR) as Polymer W illustrated in Example I having 40 percent bound styrene, 39 percent vinyl content for its butadiene portion and, for this Example, containing no extending material. ²Solution polymerization prepared styrene/butadiene rubber (H-SSBR) composite as Polymer Y illustrated in Example I with the H-SSBR having 40 percent bound styrene, 39 percent vinyl content for its butadiene portion and, for this Example, containing 37.5 parts liquid styrene/butadiene rubber per 100 parts H-SSBR and reported in the Table as parts by weight of the extended H-SSBR ³N115 rubber reinforcing carbon black, ASTM identification ⁴Primarily comprised of stearic, palmitic and oleic acids ⁵Mixture of each of a coumarone-indene resin and a hydrocarbon resin (obtained as Novares™ 100 from Rütgers and Norsolene™ S155 from Cray Valley) ⁶Fatty acid-based processing aids ⁷Sulfenamide and diphenylguanidine accelerators | |

The following Table 4 illustrates cure behavior and various physical properties of rubber compositions based upon the basic recipe of Table 3 and reported herein as a Control rubber Sample C and Experimental rubber Sample D. Where cured rubber samples are examined, such as for the stress-strain, hot rebound and hardness values, the rubber samples were cured for 28 minutes at a temperature of 150°C.

**Table 4**

| | Samples | |
|---|---|---|
| | Control | Experimental |
| Materials (phr) | C | D |
| Petroleum based oil extended SSBR (Polymer X) | 100 | 0 |
| Liquid styrene/butadiene rubber extended SSBR (Polymer Y) | 0 | 137.5 |
| Liquid styrene/butadiene polymer | 37.5 | 0 |
| | | |
| Properties | | |

| RPA' (100°C). Storage Modulus G', MPa | | |
|---|---|---|
| Uncured G' 15% strain, 0.83 Hertz (kPa) | 130 | 140 |
| Cured G' modulus, 1% strain, 1 Hertz (kPa) | 1270 | 1300 |
| Cured G' modulus, 50% strain, 1 Hertz (kPa) | 380 | 430 |
| Tan delta at 10% strain, (kPa) | 0.2 | 0.18 |
| | | |

| Rheometer (150°C) | | |
|---|---|---|
| T90 | 16.2 | 16.9 |
| Delta torque | 3.76 | 4.09 |
| | | |

| Stress-strain. ATS², 28 min. 150°C | | |
|---|---|---|
| 300% modulus, ring (MPa) | 4.8 | 5.8 |
| Elongation at break (%) | 303 | 211 |
| Tensile Strength (MPa) | 6.8 | 7 |
| | | |
| Rebound of cured rubber, 100°C | 41 | 44 |
| Shore A hardness of cured rubber, 100°C | 52 | 52 |
| Tear strength³ of cured rubber (N) | 122 | 118 |
| | | |
| Dispergrader⁴ dispersion (percent) | 96.4 | 98.6 |

| | | |
|---|---|---|
| ¹Rubber Process Analyzer (RPA) instrument ²Automated Testing System (ATS) instrument ³Data obtained according to a tear strength (peal adhesion) test to determine interfacial adhesion between two samples of a rubber composition. In particular, such interfacial adhesion is determined by pulling one rubber composition away from the other at a right angle to the untorn test specimen with the two ends of the rubber compositions being pulled apart at a 180° angle to each other using an Instron instrument at 95°C and reported as Newtons force (N). ⁴The dispergrader provides a measurement of dispersion, the higher the value, the greater the dispersion. | | |

As the dispergrader values show an improvement in material dispersion for Sample B (containing the liquid styrene/butadiene polymer (LSBP) extended H-SSBR) compared to Sample A it can be determined that there is an improvement in dispersion when extending the polymer with LSBP contained in its cement as compared to adding the LSBP to a rubber composition as a freely added plasticizing material (namely, as compared to dry mixing it with the rubber composition).

In addition, improved dispersion of the LSBP in the rubber composition of rubber Sample D is observed while maintaining stiffness of the rubber composition of rubber Sample D, as compared to Control rubber Sample C as indicated by G' at 1 percent and 50 percent strain, 1 Hertz, and 100°C of rubber Sample C and predictive resistance to tread wear for a tire with tread of such rubber composition as indicated by the similar 300 percent modulus and similar rubber hysteretic properties as indicated by similar tangent delta values at 10 percent strain, 1 Hertz, and 100°C and rebound for the rubber Sample D, as compared to Control rubber Sample C.

## Claims

1. A method of preparing an organic solvent solution polymerization-prepared high molecular weight styrene/butadiene elastomer (H-SSBR) extended with a liquid styrene/butadiene polymer (LSBP) which comprises, based on parts by weight per 100 parts by weight H-SSBR (phr):
(A) providing a cement comprising 100 parts by weight of a high molecular weight styrene/butadiene elastomer (H-SSBR) prepared by polymerization of styrene and 1,3-butadiene monomers in an organic solvent wherein said cement comprises a polymerizate of said H-SSBR and said organic solvent and wherein said H-SSBR has a number average molecular weight in a range of from 200,000 to 1,000,000 grams/mole; and
(B) providing 5 to 60 parts by weight of liquid styrene/1,3-butadiene polymer (LSBP) having a number average molecular weight in a range of from 1,000 to 50,000 grams/mole; and
(C) recovering a composite comprising a blend of H-SSBR and LSBP by removing said organic solvent.

2. The method of claim 1 wherein said LSBP is contained in cement thereof with an organic solvent.

3. The method of claim 1 or 2 wherein S + V/2 (percent bound styrene plus percent vinyl content/2) of the LSBP is in a range of from 45 to 65 or from 50 to 60.

4. The method of at least one of the previous claims wherein, for said H-SSBR, styrene and 1,3-butadiene are anionically polymerized in said organic solvent to form a cement as a polymerizate containing said H-SSBR and wherein for said LSBP styrene and 1,3-butadiene are anionically polymerized in an organic solvent to form a cement comprising a polymerizate containing said LSBP, and, optionally, wherein said polymerizations are terminated prior to blending said cements.

5. The method of at least one of the previous claims wherein said liquid styrene/butadiene polymer (LSBP) has a bound styrene content in a range of from 20 to 30 percent and has a vinyl content in its polybutadiene portion in a range of from 50 to 75 percent.

6. The method of at least one of the previous claims wherein said H-SSBR has a number average molecular weight in a range of from 200,000 to 500,000 grams/mole.

7. The method of at least one of the previous claims wherein the uncured H-SSBR has a Mooney viscosity (23°C) in a range of from 50 to 180.

8. The method of at least one of the previous claims wherein said H-SSBR is a tin or silicon coupled SSBR or a tin or silicon coupled H-SSBR containing at least one functional group comprising at least one of amine, siloxy, carboxyl and hydroxyl groups.

9. The method of at least one of the previous claims wherein said H-SSBR is a functionalized H-SSBR containing at least one functional group comprising at least one of amine, siloxy, carboxyl and hydroxyl groups.

10. The method of at least one of the previous claims wherein said H-SSBR is the product of an anionic initiated polymerization of styrene and 1,3-butadiene employing n-butyllithium as an initiator in the presence of an inert organic solvent.

11. An organic solvent solution polymerization-prepared high molecular weight styrene/butadiene elastomer (H-SSBR) extended with a liquid styrene/butadiene polymer (LSBP) comprising, based on parts by weight per 100 parts by weight H-SSBR (phr):
(A) a cement comprising 100 parts by weight of a high molecular weight styrene/butadiene elastomer (H-SSBR) prepared by polymerization of styrene and 1,3-butadiene monomers in an organic solvent wherein said cement comprises a polymerizate of said H-SSBR and said organic solvent and wherein said H-SSBR has a number average molecular weight in a range of from 200,000 to 1,000,000 grams/mole; and
(B) 5 to 60 parts by weight of liquid styrene/1,3-butadiene polymer (LSBP) having a number average molecular weight in a range of from 1,000 to 50,000 grams/mole.

12. A rubber composition comprising a composite of a liquid styrene/butadiene polymer (LSBP) and high molecular weight styrene/butadiene elastomer (H-SSBR) prepared by the method in accordance with at least one of the claims 1 to 10.

13. A rubber composition comprising, based upon parts by weight per 100 parts by weight rubber (phr):
(A) conjugated diene-based elastomers comprising:
(1) 10 to 100 phr, alternatively 20 to 90 phr, of a composite of liquid styrene/butadiene polymer (LSBP) and high molecular weight styrene/butadiene elastomer (H-SSBR) composite in accordance with claim 11 or 12, and correspondingly
(2) from zero to 90 phr, alternatively form 10 to 80 phr, of at least one additional elastomer comprising at least one of polymers of at least one of isoprene and 1,3-butadiene and copolymers of styrene and at least one of isoprene and 1,3-butadiene;
(B) 40 to 110 phr of reinforcing filler comprising:
(1) silica or precipitated silica, or
(2) carbon black, or
(3) a combination of silica or precipitated silica and carbon black;
(C) a silica coupling agent for silica or precipitated silica where said reinforcing filler contains silica having a moiety reactive with hydroxyl groups on said silica and another different moiety interactive with carbon-to-carbon double bonds of said conjugated diene-based elastomers.

14. The rubber composition of claim 13 wherein the reinforcing filler is a combination of rubber reinforcing carbon black and precipitated silica containing from 55 to 90 weight percent of said precipitated silica or wherein said reinforcing filler is a combination of rubber reinforcing carbon black and precipitated silica containing from 20 to 45 weight percent of said precipitated silica.

15. A tire having a component comprising the rubber composition in accordance with claim 11, 12, 13 or 14.
